# EUROPÄISCHE PATENTSCHRIFT

(11) **EP 1 512 571 B1**
(45) Veröffentlichungstag und Bekanntmachung des Hinweises auf die Patenterteilung: **13.06.2007**
(21) Anmeldenummer: 04021122.9
(22) Anmeldetag: 06.09.2004
(51) Int. Cl.: B60J 10/10, B60J 10/12, B60R 13/07

(54) **Fahrzeugdach mit abzudichtenden Bauteilübergängen**
Vehicle roof with sealed transition elements
Toit de véhicule avec éléments de transition à liaison étanche

(30) Priorität: 07.09.2003 DE 10341526
(43) Veröffentlichungstag der Anmeldung: 09.03.2005
(73) Patentinhaber: Webasto AG, 82131 Stockdorf (DE)
(72) Erfinder: Färber, Manfred, 82407 Wielenbach (DE)

(56) Entgegenhaltungen:
- EP-A- 1 281 547
- EP-A- 1 281 554
- DE-C- 3 910 257
- DE-C2- 19 943 765
- US-A- 4 729 593
- US-A- 5 209 546
- US-A- 5 902 008

## Beschreibung

Die Erfindung betrifft ein Fahrzeugdach mit einem festen Dachbauteil, einem daran angrenzenden bewegbaren Seitenholm und einem verlagerbaren Dachabschnitt einer vom Seitenholm und vom Dachabschnitt begrenzten Dachöffnung.

Aus der DE 199 43 765 C2 ist ein derartiges Fahrzeugdach bekannt geworden, bei dem ein verlagerbarer Dachabschnitt wie z. B. ein Faltdach am Fahrzeugdach derart gelagert ist, daß er aus seiner eine Dachöffnung überdeckenden Schließstellung, in der er an einem vorderen festen Dachbauteil wie z. B. einem Windlauf anliegt, nach hinten in eine Offenstellung verlagerbar ist. Bei geöffnetem und nach hinten verlagerten Dachabschnitt können die die Dachöffnung seitlich begrenzenden Seitenholme des Daches verlagert oder vom Dach entnommen werden. An der Schnittstelle zwischen dem festen Dachbauteil, dem Seitenholm und dem verlagerbaren Dachabschnitt sorgt eine Dichtungseinrichtung für die gegenseitige Abdichtung der Bauteile.

Hierbei ist stets die Kapillarwirkung zwischen zwei aneinander angrenzenden Teilen im Dichtungsbereich zu berücksichtigen, durch die Wasser in den Innenraum bzw. den Trockenbereich eindringen kann. Insbesondere ist ein Dichtungsbereich mit einer elastischen Dichtung zwischen zwei festen Bauteilen und einer auf dieser Anordnung aufliegenden Dichtung problematisch, da am Übergang zwischen den Bauteilen und der zwischen liegenden Dichtung aufgrund kleinster Niveauunterschiede und der Kapillarwirkung Wasser eindringen kann.

Aufgabe der Erfindung ist es, ein eingangs genanntes Fahrzeugdach zu schaffen, das eine verbesserte Abdichtung an der Schnittstelle zwischen dem festen Dachbauteil, dem Seitenholm und dem verlagerbaren Dachabschnitt bereitstellt und insbesondere Kapillarwirkungen berücksichtigt.

Diese Aufgabe wird bei dem oben genannten Fahrzeugdach erfindungsgemäß dadurch gelöst, daß das feste Dachbauteil eine Wasserführung aufweist, die in eine einen Ablauf enthaltende und dem Seitenholm benachbarte Wasserauffangkammer mündet, daß der Seitenholm eine Wasserführung aufweist, die über der Wasserauffangkammer endet, und daß der Dachabschnitt eine elastische Dichtung aufweist, die einerseits auf der Wasserführung des Dachbauteils und auf der Wasserführung des Seitenholms dicht aufliegt und andererseits die Wasserauffangkammer überspannt und an den Wasserführungen gesammeltes Wasser dort hinein ableitet.

Vorteilhafte Ausgestaltungen der Erfindung sind in den Unteransprüchen angegeben.

Durch die erfindungsgemäße Lösung wird im wesentlichen Dichtbereich Wasser auf einem gewünschten Wasserweg bzw. in eine nach oben offene Wasserauffangkammer oder Sammelrinne abgeleitet, wodurch an diesen problematischen Stellen Kapillareffekte im wesentlichen nicht auftreten können. Durch die Ableitung statt oder ergänzend zur Abdichtung mittels einer sich anlegenden Dichtung ist eine elastische Dichtung im Sichtbereich an den Übergangsstellen der Bauteile nicht oder nur in geringer Größe erforderlich oder sie läßt sich bevorzugt verdeckt anordnen, so daß die Optik an den Schnitt- oder Übergangsstellen der Bauteile durch solche Dichtungen nicht oder nur geringfügig beeinträchtigt wird. Die Wasserauffangkammer kann eine beliebige Form mit einem nach oben offenen Abschnitt aufweisen, so daß Wasser hineingeleitet werden kann oder hineintropfen kann.

Das feste Dachbauteil kann eine A-Säule, ein Windlauf, eine B-Säule, eine C-Säule oder auch eine D-Säule oder ein hinterer Seitenholm sein und es kann karosseriefest oder zumindest zeitweise festgelegt sein und alleine oder gemeinsam mit anderen Bauteilen aus seiner Position entfernbar sein, insbesondere als Teil eines umwandelbaren oder ablegbaren Daches. Damit eignet sich der dargestellte Übergang mit der Wasserleitung und den Dichtungen für unterschiedliche Einsatzgebiete am Fahrzeug, an denen Bauteile aneinander angrenzen und gegeneinander abgedichtet werden müssen. Statt eines bewegbaren Seitenholms kann allgemein auch ein anderes Fahrzeugteil oder allgemein ein Karosserieteil abgedichtet werden.

Nachfolgend wird ein Ausführungsbeispiel des Fahrzeugdaches unter Bezugnahme auf die Zeichnung näher erläutert. Es zeigt:
- Fig. 1: in perspektivischer Draufsicht ein Personenfahrzeug mit einem Fahrzeugdach (nur die linke Hälfte ist schematisch dargestellt) und einem bewegbaren Deckel, der zur Freigabe einer Dachöffnung nach hinten in eine Offenstellung bewegbar ist;
- Fig. 2: in perspektivischer Draufsicht der linke vordere Eckbereich der Dachöffnung mit dem geschlossenen Deckel, einem Windlauf, einer A-Säule und einem Seitenholm;
- Fig. 3: in perspektivischer Draufsicht der linke vordere Eckbereich der Dachöffnung bzw. des Fahrzeugdaches, wobei statt des Deckels nur eine Deckeldichtung dargestellt ist;
- Fig. 4: in perspektivischer Draufsicht der linke vordere Eckbereich der Dachöffnung gemäß Fig. 3, wobei zusätzlich eine Deckfläche oder Außenhaut des Seitenholms nicht dargestellt ist;
- Fig. 5: in perspektivischer Draufsicht der linke vordere Eckbereich der Dachöffnung gemäß Fig. 4, wobei zusätzlich der Seitenholm nicht dargestellt ist;

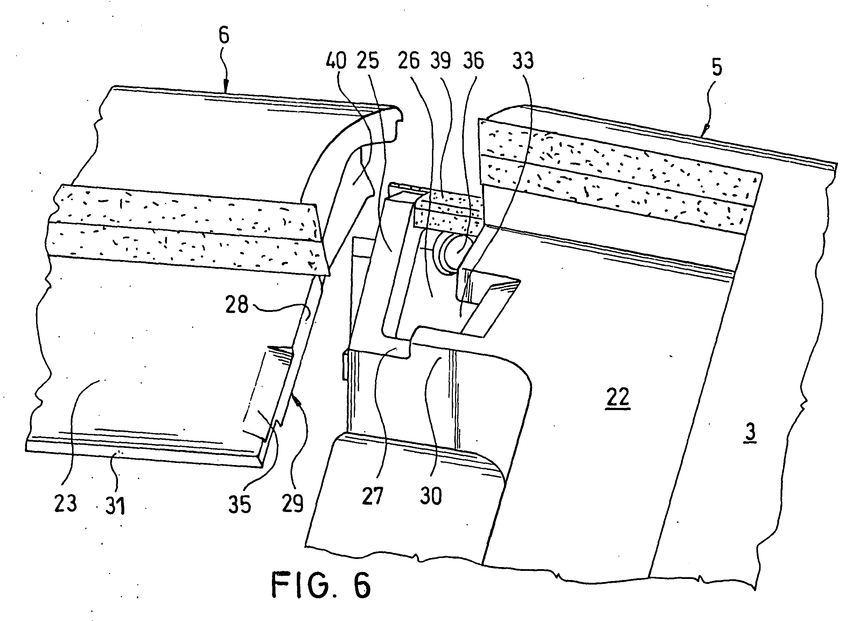

- Fig. 6: in perspektivischer Draufsicht der linke vordere Eckbereich des Fahrzeugdaches Dachöffnung, wobei der Seitenholm in einer aus seiner Riegelstellung an der A-Säule angehobenen Stellung dargestellt ist;
- Fig. 7: in perspektivischer Draufsicht gemäß Fig. 2 der Übergang von der A-Säule zum Seitenholm;
- Fig. 8: in perspektivischer Außenansicht das Ende der A-Säule mit dem Übergangsbereich zum Seitenholm, der aus seinem Dichtungssitz angehoben dargestellt ist;
- Fig. 9: in einer Querschnittansicht den Übergangsbereich zwischen dem Seitenholm, der A-Säule und dem Deckel; und
- Fig. 10: in einer Innenansicht in schematischer Darstellung die Deckeldichtung am Übergang von der A-Säule zum Seitenholm.

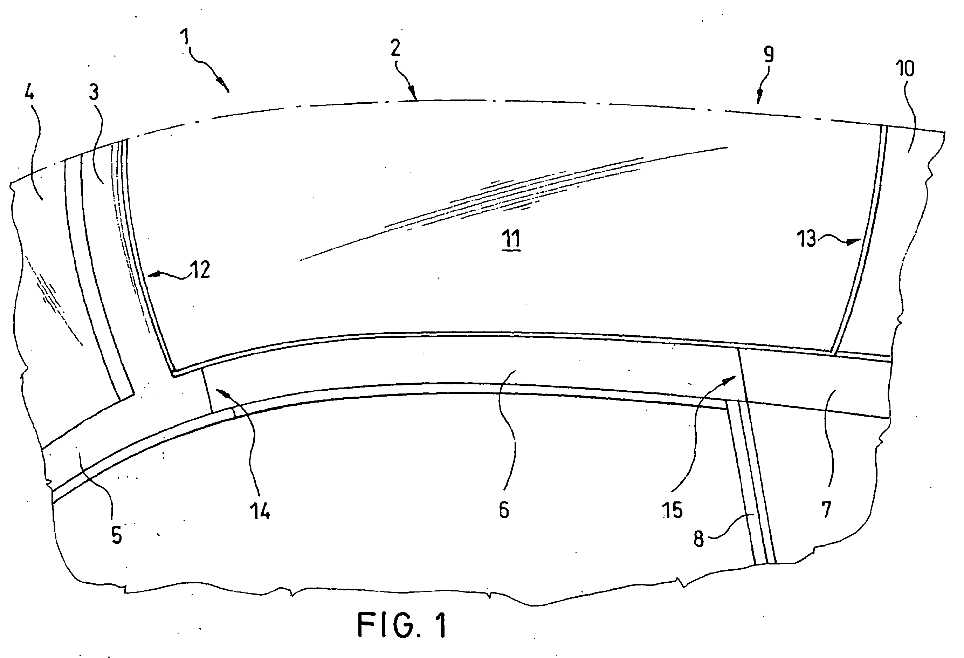

Ein Fahrzeug 1 (siehe Fig. 1) enthält ein Fahrzeugdach 2 (nur die linke Hälfte des symmetrisch aufgebauten Daches ist dargestellt und dient der Erläuterung) mit einem vorderen festen Dachbauteil 3, wie z. B. einem Dachquerholm oder Windlauf, oberhalb einer Frontscheibe 4, beidseits jeweils einer A-Säule 5, einem vorderen bewegbaren Seitenholm 6 und einem dachfesten hinteren Seitenholm 7, der sich etwa von der B-Säule 8 weiter nach hinten erstreckt. Eine Dachöffnung 9 erstreckt sich zwischen dem Windlauf 3 und den beiden bewegbaren Seitenholmen 6 und wird rückseitig von einem festen Dachteil 10 begrenzt.

Ein verlagerbarer Dachabschnitt in Form eines Deckels 11, z. B. eines Glasdeckels eines außengeführten Schiebedaches, ist zum Verschließen und zumindest teilweisen Freigeben der Dachöffnung 9 vorgesehen. Der Deckel 11 ist im Bereich seines Vorderrandes 12 beidseits mittels einer Lagereinheit an einer jeweiligen Führungseinrichtung verschiebbar gelagert, die eine Führungsschiene am vorderen Seitenholm 6 und eine weitere Führungsschiene am hinteren Seitenholm 7 aufweist. Im Bereich seines Hinterrandes 13 ist der Deckel 11 seitlich mittels einer Lagereinheit an einer jeweiligen Führungseinrichtung verschiebbar gelagert, die eine Führungsschiene am hinteren Seitenholm 7 aufweist. Zum Freigeben der Dachöffnung 9 wird der Deckel 11 mittels der Lagereinheiten an seinem Hinterrand 13 angehoben und nach hinten über das hintere feste Dachteil 10 verfahren. Ein derartiger Deckel 11 mit Lagereinrichtung und Antriebsmechanik ist in der DE 197 13 347 C1 offenbart und wird daher hier nicht näher erläutert.

Jeder vordere Seitenholm 6 ist aus seiner Funktions- oder Außenstellung (siehe Fig. 1), in der er die A-Säule 5 bzw. den Windlauf 3 mit dem festen hinteren Seitenholm 7 verbindet und die Führungsschiene zum Lagern bzw. Verschieben des Deckels 11 bereitstellt, in eine Innenstellung (nicht dargestellt) verlagerbar, sobald der Deckel 11 in einer hinteren Offenstellung angeordnet ist und ohne Lagereingriff mit der Führungsschiene ist. Der Seitenholm 6 ist hierfür mittels einer jeweiligen Lagereinrichtung an seinem Vorderende an einer Führungsschiene entlang des Windlaufs 3 und an seinem Hinterende entlang einer Führungsschiene an einem Dachquerholm hinter der Dachöffnung 9 verschiebbar gelagert. Ein derartiges Fahrzeugdach mit verlagerbaren Seitenholmen ist in der deutschen Patentanmeldung mit dem Aktenzeichen 103 31 144.0 vom 09.07.2003 beschrieben, auf die diesbezüglich ausdrücklich verwiesen wird.

Alternativ kann neben anders gestalteten Bewegungseinrichtungen jeder Seitenholm 6 aus seiner verriegelten Stellung an der A-Säule 5 und der B-Säule 8 bzw. dem hinteren Seitenholm 7 auch manuell entnommen werden, wie dies z. B. in der DE 199 43 765 C2 offenbart ist. Gleichfalls können die hinteren Seitenholme 7 zusammen mit dem hinteren festen Dachteil 10 Teil eines ablegbaren Cabriolet-Daches sein, so daß sie nur vorübergehend als feststehende Teile anzusehen sind, beispielsweise bei lediglich geöffnetem Schiebedach und ansonsten geschlossenem Dach.

Somit bestehen zwei wesentliche Dichtungsbereiche an den Schnittstellen am Vorderenden 14 und am Hinterende 15 des Seitenholms 6.

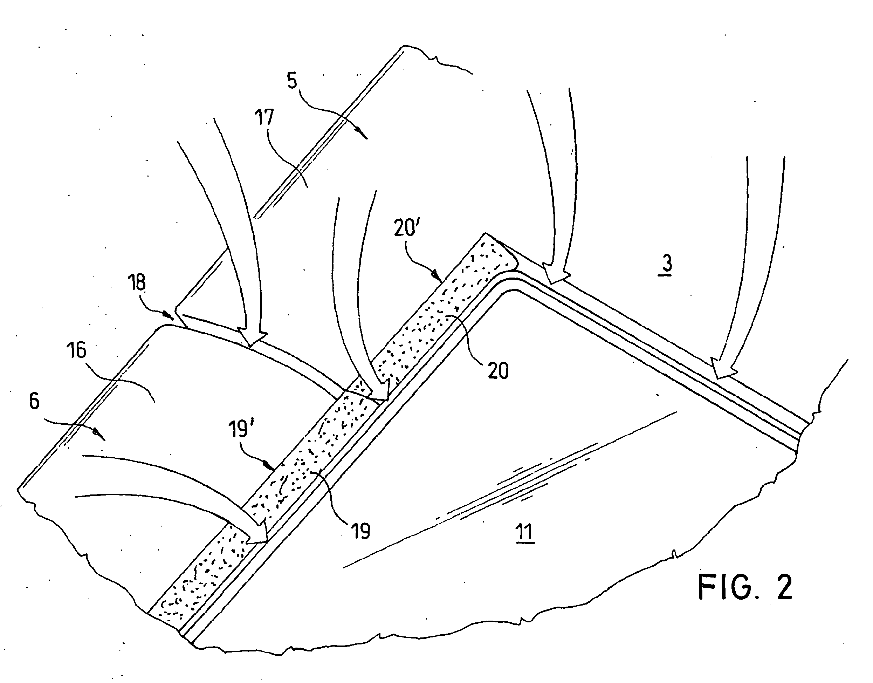

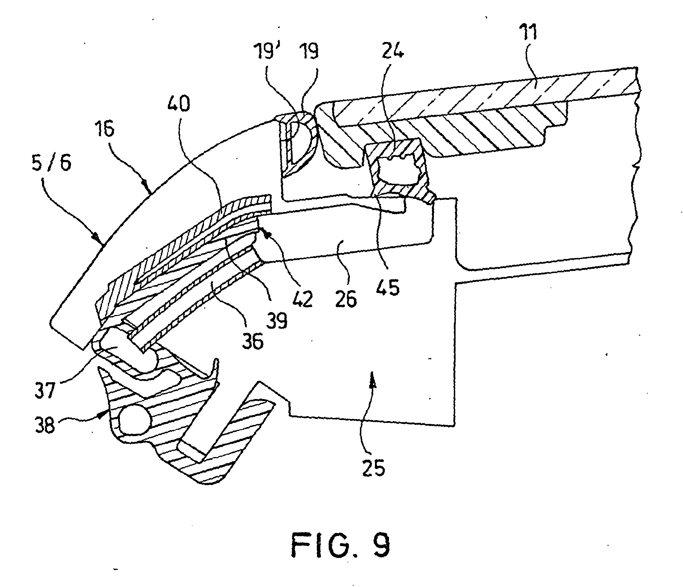

Am vorderen Dichtungsbereich grenzt der Seitenholm 6 an die A-Säule 5 an, wobei deren obere Deckbauteile oder Deckflächen 16 und 17 mit einem geringem Spalt 18 von z. B. etwa 3 mm voneinander angeordnet sind, während eine Seitenholm-Deckeldichtung 19 unmittelbar mit einer A-Säulen-Deckeldichtung 20 in Dichtkontakt ist. Die beiden Deckeldichtungen 19 und 20 sind an jeweiligen vertikalen Befestigungsflächen 19' und 20' an dem Seitenholm 6 bzw. der A-Säule 5 (siehe auch Fig. 9) angebracht und liegen bei geschlossenen Deckel 11 an diesem dicht an. Die in Fig. 2 dargestellten Pfeile deuten einen möglichen Wassereintritt zwischen dem Deckel 11 und dem Windlauf 3 bzw. den Deckeldichtungen 19 und 20 und zwischen dem Seitenholm 6 und der A-Säule 5 an.

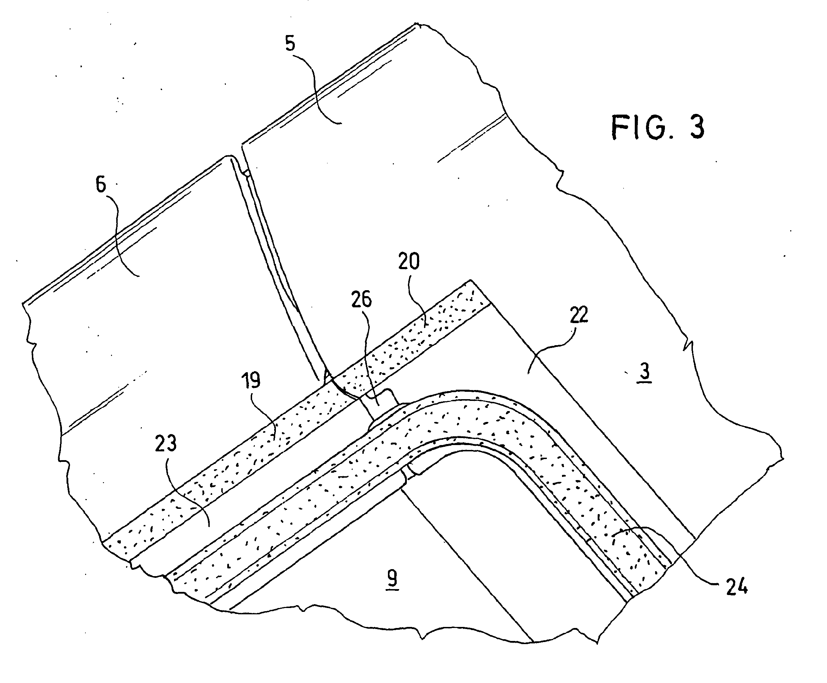

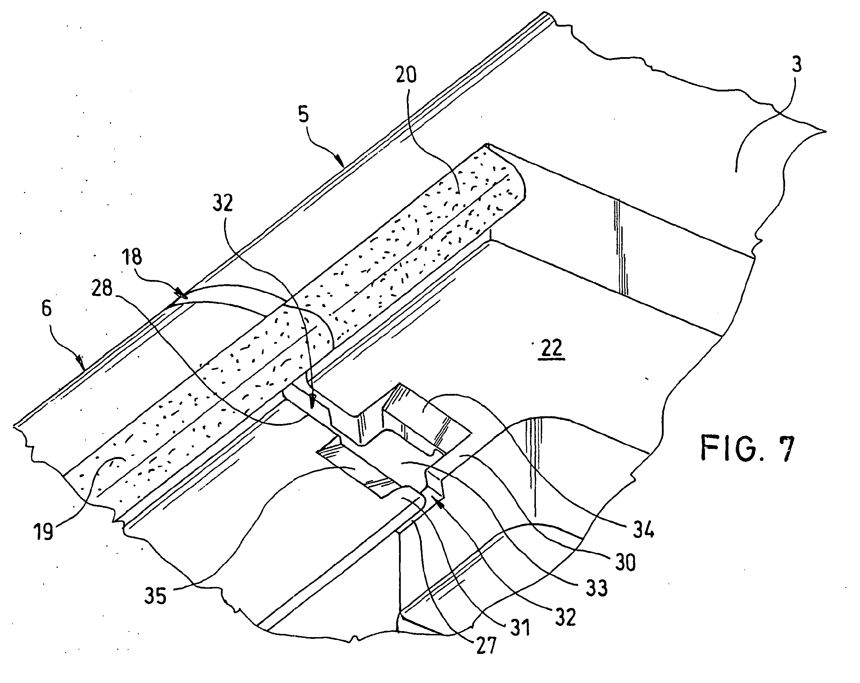

Der Windlauf 3 und die A-Säule 5 weisen eine Wasserführung 22 auf (siehe Fig. 3 und 7), die als nach unten zurückgesetzter und zur Dachöffnung 9 vorstehender Flansch gebildet ist. Der Seitenholm 6 weist eine entsprechende flanschartige Wasserführung 23 auf. Eine elastische Deckeldichtung 24, die an der Unterseite des Deckels 11 und benachbart zum Deckelrand angebracht ist (in Fig. 3 ist die Dichtung 24, nicht jedoch der Deckel 11 dargestellt) liegt bei geschlossenem Deckel 11 auf den beiden Wasserführungen 22 und 23 auf.

Die Wasserführung 22 geht vor einer dem Seitenholm 6 zugewandten Abschlußwand 25 der A-Säule 5 in eine nach oben offene Wasserauffangkammer 26 über, die gegenüber der Wasserführung 22 vertieft gebildet ist und zum Seitenholm 6 hin von der Abschlußwand 25 begrenzt ist. Der Oberrand der Abschlußwand 25 und ein Abschnitt des Oberrandes der innenseitigen Abschlußwand 27 ist gegenüber dem Niveau der Wasserführung 22 abgesenkt, so daß sich die Wasserführung 23 des Seitenholms 6 mit ihrem Vorderrand 28 über den Oberrand der Abschlußwand 25 und der innenseitigen Abschlußwand 27 erstreckt. Dabei endet der Vorderrand 28 über der Wasserauffangkammer 26 mit horizontalem Abstand von dem Oberrand der Abschlußwand 25 und der Vorderrand 28 ist in dem Bereich über der Wasserauffangkammer 26 mit einer nach unten zur Wasserauffangkammer 26 gebogenen Abtropflippe 29 gebildet. Die beiden Wasserführungen 22 und 23 sind auch an ihren der Dachöffnung 9 zugewandten Innenrändern 30 bzw. 31 niveaugleich zueinander angeordnet, jedoch insgesamt durch einen Spalt 32 getrennt.

Die Wasserauffangkammer 26 enthält nach vorne in Richtung zum Windlauf 3 eine Erweiterung 33, an die sich nach vorne hin eine Abschrägung 34 der Wasserführungen 22 anschließt, die an den Innenrand 30 der Wasserführung 22 angrenzt und derart angeordnet ist, daß die Deckeldichtung 24 bei geschlossenem Deckel 11 auf dieser Abschrägung 34 aufliegt (siehe Fig. 3, 4 und 10). Die Wasserführung 23 des Seitenholms 6 enthält an ihrem Vorderrand 28 eine entsprechende Abschrägung 35 zur Auflage der Deckeldichtung 24. Die Erweiterung 33 stellt eine für ein sicheres Wassermanagement ausreichende Größe der Wasserauffangkammer 26 an der wesentlichen Schnitt- bzw. Übergangsstelle dar.

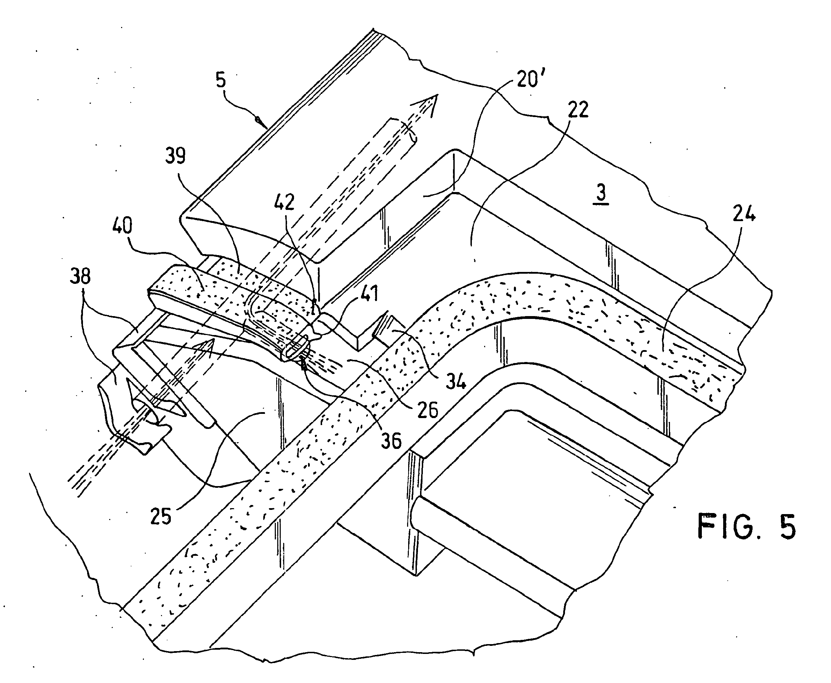

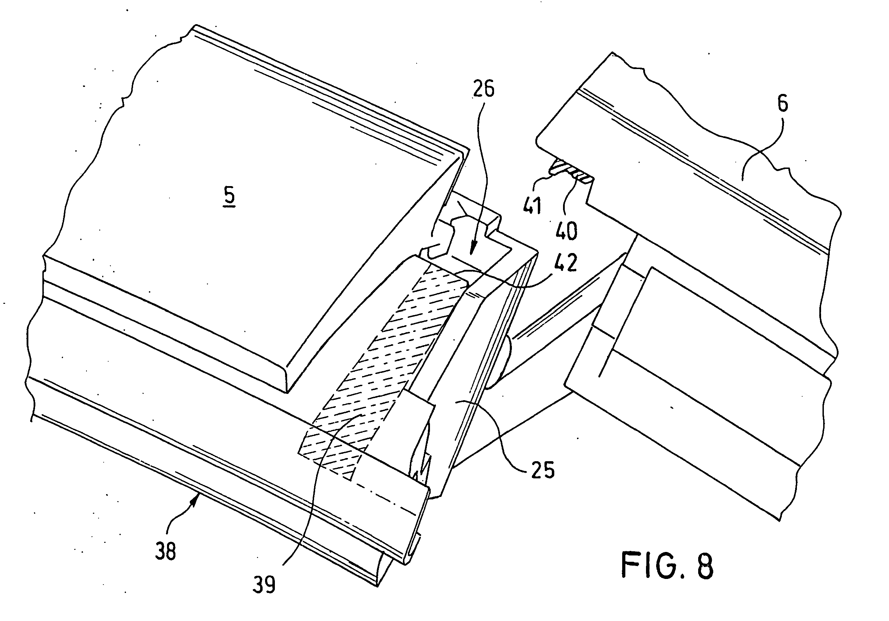

Ein Ablauf 36 verbindet die Wasserauffangkammer 26 mit einem Wasserkanal 37, der in einer an der A-Säule 5 angebrachten Fensterdichtung 38 enthalten ist. Die Fensterdichtung 38 enthält einen angeformten oberen Dichtabschnitt 39, der einen oberseitigen geneigten Abschluß am Ende der A-Säule 5 über dem Ablauf 36 bildet, sich von außen bis zur Wasserauffangkammer 26 nach innen schräg aufwärts erstreckt und zur Auflage einer Dichtung 40 dient (der Auflagebereich ist in Fig. 8 schraffiert dargestellt), die am Seitenholm 6 unterhalb seines Vorderrandes 28 und davon etwas zurückgesetzt angeordnet ist und sich im wesentlichen nur in dem äußeren Bereich am Vorderende 14 des Seitenholms 6 und geringfügig nach oben über den Dichtabschnitt 39 hinaus erstreckt. Eine Dichtlippe 41 drückt im Dichteingriff auf den Dichtabschnitt 39 und steht noch über den Oberrand 42 des oberen Dichtabschnitt 39 hinaus (siehe Fig. 5 und 9), so daß Wasser, das im Spalt 18 auf dem oberen Dichtabschnitt 39 nach innen eindringt, entlang der Dichtung 40 nach innen fließen kann und dann an der über der Wasserauffangkammer 26 überstehenden Dichtlippe 41 in die Wasserauffangkammer 26 abtropfen kann. Damit wird vermieden, daß Wasser über eine Kapillarwirkung aus dem Naßbereich unter der Dichtung hindurch in den Trockenbereich eindringen kann.

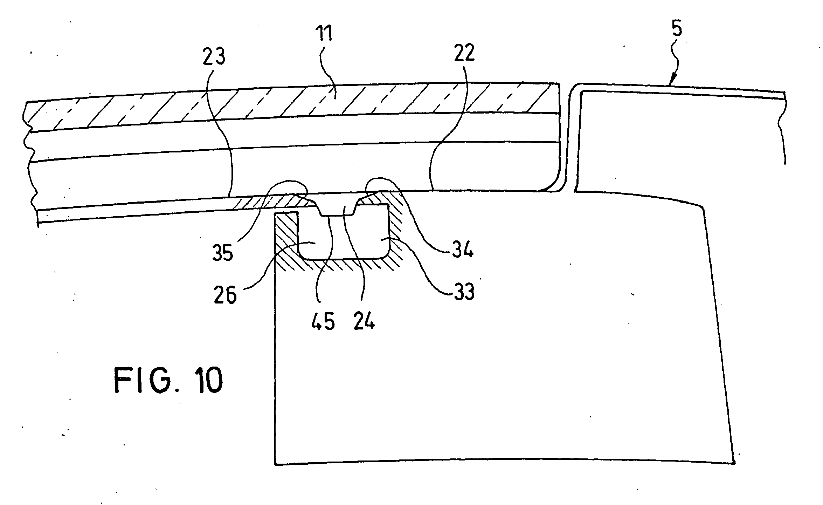

Bei geschlossenem Deckel 11 liegt die am Deckel 11 angebrachte Deckeldichtung 24 somit elastisch komprimiert dicht auf den beiden Wasserführungen 22 und 23 auf. Am Übergangsbereich zwischen der A-Säule 5 und dem Seitenholm 6 liegt die Deckeldichtung 24 auf den beiden Abschrägungen 34 und 35 auf, so daß sie zur Wasserauffangkammer 26 und deren Erweiterung 33 hin weniger komprimiert ist und die Wasserauffangkammer 26 und die Erweiterung 33 frei überspannt (siehe schematische Darstellung in Fig. 10).

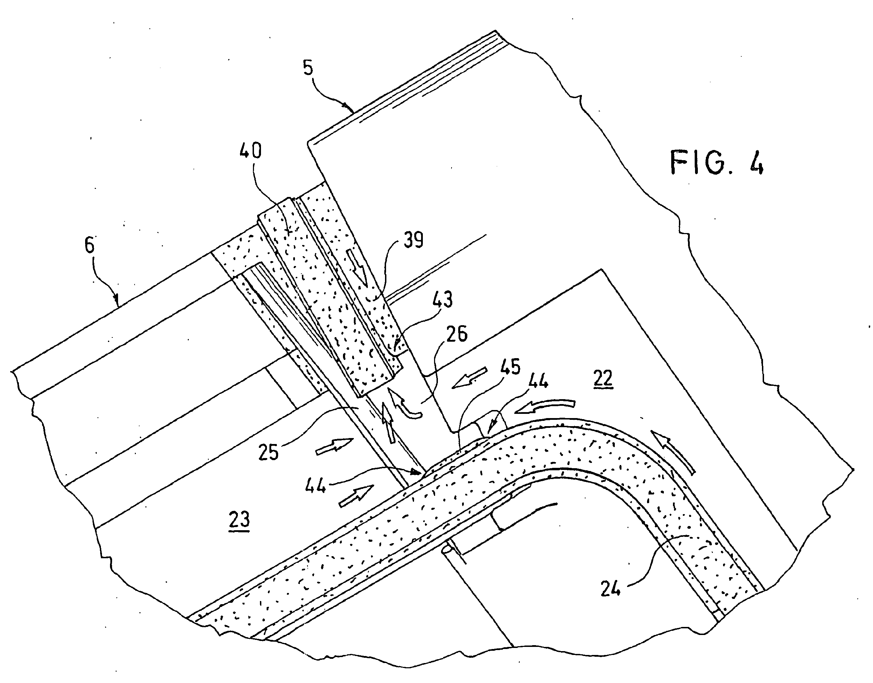

Durch die weich gestalteten, homogenen Übergänge zwischen der Dichtung 40 des Seitenholms 6 am oberen Dichtabschnitt 39 (Übergang 43 in Fig. 4) und zwischen der Deckeldichtung 24 bzw. deren äußerer Dichtlippe 45 und den beiden Wasserführungen 22 und 23 (Übergänge 44 in Fig. 4) kann das Wasser optimal geführt und abgeleitet werden, wobei Kapillarwirkungen vermieden werden. Alle wesentlichen Bereiche enthalten ausreichend große Wasserauffangkammern oder Rinnen und an den Dichtungen sind ausreichend große Dichtlippen gebildet, die an ihren Dichtungskontaktstellen einen homogenen Übergang bilden.

### Bezugszeichenliste

- 1: Fahrzeug
- 2: Fahrzeugdach
- 3: vorderes Dachbauteil
- 4: Frontscheibe
- 5: A-Säule
- 6: vorderer Seitenholm
- 7: hinterer Seitenholm
- 8: B-Säule
- 9: Dachöffnung
- 10: festes Dachteil
- 11: Deckel
- 12: Vorderrand
- 13: Hinterrand
- 14: Vorderende
- 15: Hinterende
- 16: Deckfläche
- 17: Deckfläche
- 18: Spalt
- 19: Seitenholm-Deckeldichtung
- 19': Befestigungsfläche
- 20: A-Säulen-Deckeldichtung
- 20': Befestigungsfläche
- 21 22: Wasserführung
- 23: Wasserführung
- 24: Deckeldichtung
- 25: Abschlußwand
- 26: Wasserauffangkammer
- 27: Abschlußwand
- 28: Vorderrand
- 29: Abtropflippe
- 30: Innenrand
- 31: Innenrand
- 32: Spalt
- 33: Erweiterung
- 34: Abschrägung
- 35: Abschrägung
- 36: Ablauf
- 37: Wasserkanal
- 38: Fensterdichtung
- 39: oberer Dichtabschnitt
- 40: Dichtung
- 41: Dichtlippe
- 42: Oberrand
- 43: Übergang
- 44: Übergang
- 45: Dichtlippe

## Patentansprüche

1. Fahrzeugdach mit einem festen Dachbauteil (3, 5) einem daran angrenzenden bewegbaren Seitenholm (6) und einem verlagerbaren Dachabschnitt (11) einer vom Seitenholm (6) und vom Dachabschnitt (11) begrenzten Dachöffnung,
**dadurch gekennzeichnet,**
**daß** das feste Dachbauteil (3, 5) eine Wasserführung (22) aufweist, die in eine einen Ablauf (36) enthaltende und dem Seitenholm (6) benachbarte Wasserauffangkammer (26) mündet,
**daß** der Seitenholm (6) eine Wasserführung (23) aufweist, die über der Wasserauffangkammer (26) endet, und
**daß** der Dachabschnitt (11) eine elastische Dichtung (24) aufweist, die einerseits auf der Wasserführung (22) des Dachbauteils (3, 5) und auf der Wasserführung (23) des Seitenholms (6) dicht aufliegt und andererseits die Wasserauffangkammer (26) überspannt und an den Wasserführungen (22, 23) gesammeltes Wasser dort hinein ableitet.

2. Fahrzeugdach nach Anspruch 1,
**dadurch gekennzeichnet, daß** ein dichtungsfreier Spalt (32) die Wasserführung (23) des Seitenholms (6) von der Wasserführung (22) des Dachbauteils (3, 5) trennt.

3. Fahrzeugdach nach Anspruch 1 oder 2,
**dadurch gekennzeichnet, daß** die Wasserführungen (22, 23) als Flansche gebildet sind, die sich einwärts zur Dachöffnung (9) erstrecken.

4. Fahrzeugdach nach einem der Ansprüche 1 bis 3,
**dadurch gekennzeichnet, daß** die Dichtung (24) des Dachabschnitts (11) eine äußere Dichtlippe (45) aufweist.

5. Fahrzeugdach nach einem der Ansprüche 1 bis 4,
**dadurch gekennzeichnet, daß** die Wasserauffangkammer (26) eine Erweiterung (33) aufweist.

6. Fahrzeugdach nach einem der Ansprüche 1 bis 5,
**dadurch gekennzeichnet, daß** die Wasserauffangkammer (26) einen Ablauf (36) aufweist, der insbesondere in einen Wasserkanal (37) in einer Dichtung (38), insbesondere einer Fensterdichtung, mündet.

7. Fahrzeugdach nach einem der Ansprüche 1 bis 6,
**dadurch gekennzeichnet, daß** der Seitenholm (6) an seinem dem festen Dachbauteil (5)angrenzenden Ende (14) ein Abtropflippe (29) über der Wasserauffangkammer (26) und nach außen hin eine Dichtung (40) aufweist, die auf einer Dichtfläche (39) am festen Dachbauteil (5) aufliegt und sich nach innen bis über die Wasserauffangkammer (26) erstreckt.

8. Fahrzeugdach nach Anspruch 7,
**dadurch gekennzeichnet, daß** die Dichtung (40) des Seitenholms (6) eine Dichtlippe (41) aufweist, die über der Wasserauffangkammer (26) endet und Wasser dort hinein leitet.

9. Fahrzeugdach nach einem der Ansprüche 1 bis 8,
**dadurch gekennzeichnet, daß** die Wasserführung (23) des Seitenholms (6) und die Wasserführung (22) des Dachbauteils (5) jeweils eine Abschrägung (34 bzw. 35) zur Wasserauffangkammer (26) hin aufweisen, auf denen die Dichtung (24) des Dachabschnitts (11) aufliegt.

10. Fahrzeugdach nach einem der Ansprüche 1 bis 9,
**dadurch gekennzeichnet, daß** das feste Dachbauteil eine A-Säule (5), ein Windlauf (3), eine B-Säule (8), eine C-Säule oder ein hinterer Seitenholm (7) ist und karosseriefest oder zumindest zeitweise festgelegt ist und alleine oder gemeinsam mit anderen Bauteilen aus seiner Position entfernbar ist, insbesondere als Teil eines umwandelbaren oder ablegbaren Daches.

## Claims

1. Vehicle roof having a fixed roof component (3, 5), a movable side member (6) adjacent thereto and a displaceable roof section (11) of a roof opening bounded by the side member (6) and by the roof section (11),
**characterized**
**in that** the fixed roof component (3, 5) has a water channel (22), which opens into a water collecting chamber (26) containing a drain (36) and adjacent to the side member (6),
**in that** the side member (6) has a water channel (23), which ends above the water collecting chamber (26), and
**in that** the roof section (11) has a resilient seal (24), which firstly rests tightly on the water channel (22) of the roof component (3, 5) and on the water channel (23) of the side member (6) and secondly spans the water collecting chamber (26) and drains collected water into the water channels (22, 23).

2. Vehicle roof according to Claim 1, **characterized in that** a seal-free gap (32) separates the water channel (23) of the side member (6) from the water channel (22) of the roof component (3, 5).

3. Vehicle roof according to Claim 1 or 2, **characterized in that** the water channels (22, 23) are formed as flanges which extend inwards to the roof opening (9).

4. Vehicle roof according to one of Claims 1 to 3, **characterized in that** the seal (24) of the roof section (11) has an outer sealing lip (45).

5. Vehicle roof according to one of Claims 1 to 4, **characterized in that** the water collecting chamber (26) has a widened portion (33).

6. Vehicle roof according to one of Claims 1 to 5, **characterized in that** the water collecting chamber (26) has a drain (36) which, in particular, opens into a water channel (37) in a seal (38), in particular a window seal.

7. Vehicle roof according to one of Claims 1 to 6, **characterized in that**, at its end (14) adjacent to the fixed roof component (5), the side member (6) has a drip lip (29) above the water collecting chamber (26) and, on the outside, has a seal (40), which rests on a sealing surface (39) on the fixed roof component (5) and extends inwards until above the water collecting chamber (26).

8. Vehicle roof according to Claim 7, **characterized in that** the seal (40) of the side member (6) has a sealing lip (41) which ends above the water collecting chamber (26) and leads water into the latter.

9. Vehicle roof according to one of Claims 1 to 8, **characterized in that** the water channel (23) of the side member (6) and the water channel (22) of the roof component (5) each have a chamfer (34 and 35, respectively) towards the water collecting chamber (26), on which the seal (24) of the roof section (11) rests.

10. Vehicle roof according to one of Claims 1 to 9, **characterized in that** the fixed roof component is an A pillar (5), an apron (3), a B pillar (8), a C pillar or a rear side member (7) and is fixed to the bodywork or is fixed for at least some of the time and, on its own or together with other components, can be removed from its position, in particular as part of a convertible roof or a roof that can be stored.

## Revendications

1. Toit de véhicule avec un élément de toit fixe (3, 5), un longeron latéral mobile adjacent (6) et une section de toit pouvant être déplacée (11) d'une ouverture de toit délimitée par le longeron latéral (6) et par la section de toit (11),
**caractérisé en ce**
**que** l'élément de toit fixe (3, 5) présente une gouttière (22) qui aboutit dans un compartiment de récupération d'eau (26) contenant un dispositif d'écoulement (36) et étant contigu au longeron latéral (6),
en ce que le longeron latéral (6) présente une gouttière (23) qui se termine au-dessus du compartiment de récupération d'eau (26) et
en ce que la section de toit (11) présente un joint élastique (24) qui est d'une part posé de manière étanche sur la gouttière (22) de l'élément de toit (3, 5) et sur la gouttière (23) du longeron latéral (6) et, d'autre part, recouvre le compartiment de récupération d'eau (26) et y fait dériver l'eau accumulée dans les gouttières (22, 23).

2. Toit de véhicule selon la revendication 1,
**caractérisé en ce qu'**une fente exempte de joint (32) sépare la gouttière (23) du longeron latéral (6) de la gouttière (22) de l'élément de toit (3, 5).

3. Toit de véhicule selon la revendication 1 ou 2,
**caractérisé en ce que** les gouttières (22, 23) sont réalisées sous forme de brides qui s'étendent vers l'intérieur en direction de l'ouverture du toit (9).

4. Toit de véhicule selon l'une quelconque des revendications 1 à 3.
**caractérisé en ce que** le joint (24) de la section de toit (11) présente une lèvre étanche extérieure (45).

5. Toit de véhicule selon l'une quelconque des revendications 1 à 4.
**caractérisé en ce que** le compartiment de récupération d'eau (26) présente une extension (33).

6. Toit de véhicule selon l'une quelconque des revendications 1 à 5,
**caractérisé en ce que** le compartiment de récupération d'eau (26) présente un dispositif d'écoulement (36) qui aboutit en particulier dans un canal à eau (37) situé dans un joint (38), en particulier dans un joint de fenêtre.

7. Toit de véhicule selon l'une quelconque des revendications 1 à 6,
**caractérisé en ce que** le longeron latéral (6) présente à son extrémité (14) contiguë à l'élément de toit fixe (5) une lèvre d'égouttage (29) au-dessus du compartiment de récupération d'eau (26) et, vers l'extérieur, un joint (40) posé sur une surface étanche (39) de l'élément de toit fixe (5), qui s'étend vers l'intérieur jusqu'au-dessus du compartiment de récupération d'eau (26).

8. Toit de véhicule selon la revendication 7,
**caractérisé en ce que** le joint (40) du longeron latéral (6) présente une lèvre d'étanchéité (41) qui se termine au-dessus du compartiment de récupération d'eau (26) et y guide de l'eau.

9. Toit de véhicule selon l'une quelconque des revendications 1 à 8,
**caractérisé en ce que** la gouttière (23) du longeron latéral (6) et la gouttière (22) de l'élément de toit (5) présentent chacune un chanfreinage (34 respectivement 35) vers le compartiment de récupération d'eau (26), chanfreinage sur lequel la lèvre (24) de l'élément de toit (11) est posée.

10. Toit de véhicule selon l'une quelconque des revendications 1 à 9,
**caractérisé en ce que** l'élément de toit fixe est une colonne A (5), un déflecteur (3), une colonne B (8), une colonne C ou un longeron latéral arrière (7) et est fixé à la carrosserie ou du moins monté ou fixé par moments et peut être enlevé, seul ou avec d'autres éléments, de sa position, en particulier en tant que composant d'un toit transformable ou amovible.
